# EUROPÄISCHE PATENTSCHRIFT

(11) **EP 2 572 945 B1**
(45) Veröffentlichungstag und Bekanntmachung des Hinweises auf die Patenterteilung: **01.10.2014**
(21) Anmeldenummer: 12005768.2
(22) Anmeldetag: 08.08.2012
(51) Int. Cl.: B60R 25/02

(54) **Elektrische Lenkverriegelung**
Electric steering lock
Verrouillage de direction électrique

(30) Priorität: 20.09.2011 DE 102011113669
(43) Veröffentlichungstag der Anmeldung: 27.03.2013
(73) Patentinhaber: Huf Hülsbeck & Fürst GmbH & Co. KG, 42551 Velbert (DE)
(72) Erfinder: Indinger, Max, 82131 Gauting (DE)
(74) Vertreter: Schäfer, Matthias W.

(56) Entgegenhaltungen:
- EP-A2- 0 887 240
- EP-A2- 1 176 065
- DE-A1-102005 030 727
- DE-A1-102005 037 648
- US-A1- 2002 088 257
- US-A1- 2009 260 408

## Beschreibung

### Gebiet der Erfindung

Die Erfindung betrifft eine elektrische Lenkverriegelung für ein Fahrzeug mit einer Grundplatte, auf der ein Motor mit Antriebswelle und Getrieberad angeordnet ist. Dabei treibt das Getrieberad ein Antriebsrad mit außen liegender Hubkurve an, die mit dem Betätigen eines Sperrbolzen in Eingriff steht.

### Stand der Technik

Gemäß dem bekannten Stand der Technik sind gattungsgemäße Lenkverriegelungen derart an der Lenkung montiert, dass die Lenksäulenachse die Verlängerung der Achse des Antriebsrads schneidet. Dabei wird der Betätiger und der Verriegelungsbolzen auf dem Radienstrahl des Antriebsrads angeordnet. Der Verriegelungsbolzen ist dabei an seinem Verriegelungsabschnitt als länglich hervorstehende Kufe oder Keil ausgebildet, um in die Nut eines an der Lenksachse angeordneten Nutrings einzugreifen. Hierdurch entsteht das Problem, dass je nach verfügbarem Bauraum und Einbauanlage eine neue Grundplatte mit für den jeweiligen Fahrzeug- bzw. Lenkungstyp geeigneter Anordnung des Verriegelungsbolzens gefunden werden muss. Dies erfordert erhöhten Entwicklungs- und Produktionsaufwand und damit verbundene Kosten sowie erhebliche Folgekosten für die Bereitstellung von individuellen Ersatz- und Austauschteilen über die Lebensdauer eines Fahrzeugtyps.

Auch die DE 10 2005 037 648 A1 offenbart eine elektrische Lenkverriegelung mit einem im Gehäuse angebrachten Motor mit Antriebswelle und Getrieberad, einem Antriebsrad mit einer Verzahnung, die mit dem Getrieberad im Eingriff steht, einer Sperrbolzenlagerung, welche das Gehäuse durchdringt, einem Sperrbolzen zum Verriegeln einer Lenkachse, wobei im Gehäuse zwei optionale Positionen, der Sperrbolzenlagerung vorgesehen sind. Dabei besteht das Gehäuse aus einer Gehäusegrundplatte und einer Gehäuseabdeckung. Hierbei weist die Gehäusegrundplatte der DE 10 2005 037 648 A1 keinen Durchlass für eine Sperrbolzenlagerung auf. Vielmehr sind genau zwei Durchlässe in der Gehäuseabdeckung vorgesehen. Dabei verläuft die Bewegungsrichtung des Sperrbolzens in einer ersten Ausführungsform in senkrechter und in einer zweiten Ausführungsform in paralleler Richtung zur Achse eines Schneckenrads.

Der Erfindung liegt daher die Aufgabe zugrunde, eine elektrische Lenkverriegelung für ein Fahrzeug zur Verfügung zu stellen, welche die Nachteile des Standes der Technik vermeidet, die kostengünstig zu fertigen ist, eine kompakte Bauform aufweist, kostengünstig, schnell und bei sicherer Fehlervermeidung zu montieren und für unterschiedliche Fahrzeugtypen mit verschiedenen Positionen der Lenksäulenachse verwendbar ist.

Diese Aufgabe wird durch eine elektrische Lenkverriegelung für ein Fahrzeug mit den Merkmalen des Anspruchs 1 gelöst. Vorteilhafte Ausführungsformen und Weiterbildungen der Erfindung werden in den Unteransprüchen beschrieben.

Dazu wird erfindungsgemäß eine elektrische Lenkverriegelung für ein Fahrzeug zur Verfügung gestellt, welche folgendes aufweist:
- eine Grundplatte, beispielsweise aus Druckguss- oder Spritzgussmaterial hergestellt,
- einen auf der Grundplatte angebrachten Motor mit Antriebswelle und Getrieberad,
- ein Antriebsrad mit außen liegender Hubkurve und einer Verzahnung, die mit dem Getrieberad im Eingriff steht, wobei das Antriebsrad bzw. die Achse des Antriebsrads vorzugsweise senkrecht auf der Grundplatte steht,
- eine Sperrbolzenlagerung, welche die Grundplatte durchdringt,
- einen Sperrbolzen zum Verriegeln einer Lenksäulenachse, der über einen Betätiger mit der Hubkurve des Antriebsrades im Eingriff steht, wobei der Verfahrweg des Sperrbolzens vorzugsweise senkrecht zur Grundplatte durch diese hindurch verläuft.

Dabei sind auf der Grundplatte mehrere optionale Positionen der Sperrbolzenlagerung um das Antriebsrad herum vorgesehen sowie abhängig von der Position der Sperrbolzenlagerung ein angepasster Sperrbolzen und/oder ein angepasster Betätiger, wobei die Lenksäulenachse optional außerhalb der Achse des Antriebsrads angeordnet ist, wodurch unterschiedliche Einbaulagen der elektrischen Lenkverriegelung in Bezug auf die Lenksäulenachsenlage in modularer Bauweise abgedeckt werden. Hierdurch wird erreicht, dass unterschiedliche Bauräume und Einbaulagen verschiedener Fahrzeug- und Lenkungstypen mit ein und derselben Grundplatte und Antriebseinheit ausgestattet werden können, da die Anpassung der Sperrbolzenlage über eine entsprechende Anordnung der Sperrbolzenlagerung und zusätzlich über die Verwindung eines angepassten Sperrbolzen und/oder angepassten Betätigers erfolgt. Dabei ist unter "angepasst" eine entsprechende Asymmetrie bzw. Verwendung zu verstehen. Mit anderen Worten, Grundplatte, Motor, Antriebswelle, Getrieberad und Antriebsrad müssen nur einmal ausgelegt und berechnet werden. Die Komponenten können vorgefertigt werden und immer in der gleichen Weise moniert werden. Lediglich der Sperrbolzen und/oder der Betätiger werden je nach Anwendung aus einem Modulbaukasten ausgewählt. Der Sperrbolzen kann dabei beispielsweise als Drehteil oder Sinterbauteil hergestellt sein.

Vorteilhafterweise kann die die elektrische Lenkverriegelungden angepassten Sperrbolzen aufweisen, der in Richtung seiner Hochachse verfahren werden kann. Ferner weist dieser Sperrbolzen einen unteren im Wesentlichen keil- oder kufenförmigen Abschnitt auf, der in eine Vertiefung oder Nut an der Lenksäulenachse zu deren Verriegelung eingreifen kann. Dabei verläuft die Längserstreckung des Keilförmigen Abschnitts in Längsachsenrichtung. Nun weist der Sperrbolzen einen in der Sperrbolzenlagerung geführten oberen Abschnitt mit einer ersten Längsachse auf, die im wesentlichen mit dem Radienstrahl des Antriebsrads zusammenfällt, und den unteren im wesentlichen keilförmigen Abschnitt mit einer zweiten Längsachse, wobei der untere Abschnitt gegenüber dem oberen Abschnitt um einen Winkel α verdreht ist.

Alternativ oder zusätzlich kann der angepasste Betätiger in einem Winkel β zur ersten Längsachse des Sperrbolzens angeordnet sein, wobei die erste Längsachse des Sperrbolzens in einem Winkel α größer oder gleich 0° zum Radius des Antriebsrads steht. Dabei kann dieser Betätiger beispielsweise einstückig mit dem Sperrbolzen oder aber auch als Anbauteil für den Sperrbolzen ausgebildet sein.

Vorteilhafterweise entspricht ein Versatzwinkel γ zwischen der Längsachse des Sperrbolzens und der Lenksäulenachse der Summe der Winkel α und Winkel β.

Zum Zwecke einer einheitlichen Fertigung der Grundplatte, kann die Grundplatte vorteilhafterweise mehrere sie durchdringende Sperrbolzenlagerungen aufweisen. Hierdurch kann die Grundplatte bereits für viele mögliche alternative Einbaupositionen vorbereitet sein. D.h., die Grundplatte mit Antriebseinheit kann bereits vormontiert sein und beispielsweise fünf oder sieben die Grundplatte durchdringende Sperrbolzenlagerungen aufweisen. Dabei sind die als längliche Öffnung in der Grundplatte ausgebildeten Sperrbolzenlager entlang des Umfangs des Antriebsrads auf der Grundplatte angeordnet. Die Sperrbolzenlagerungen können dabei entweder mit ihrer Längsachse auf einem Radienstrahl des Antriebsrads ausgerichtet sein oder aber entlang der Achsenrichtung einer zu verriegelnden Lenksäulenachse. Je nach Einbauposition im Fahrzeug wird ein geeignetes Sperrbolzenlager mit passendem Sperrbolzen und/oder Betätiger aus dem Modulbaukasten ausgewählt werden. Dies bedeutet, dass der Versatz der zu verriegelnden Lenksäulenachse entweder durch die Schrägstellung des unteren Sperrbolzenabschnitts oder durch die Schrägstellung des Betätigers oder durch beides ausgeglichen wird.

Der Sperrbolzen ist vorteilhafterweise in Verfahrrichtung federbelastet und wird durch eine in einer Federlagerung gehaltene Feder in der Sperrbolzenlagerung gehalten. Dabei wird der Sperrbolzen durch die druckausübende Feder in Richtung einer Lenksäule gedrückt. Der Sperrbolzen stützt sich dabei über den Betätiger an der Hubkurve ab.

Zur Montage des Betätigers weist der Sperrbolzen vorteilhafterweise am oberen Abschnitt (31) eine Aufnahme für einen Betätiger (40, 40') auf, wobei auf einer Fläche in dem oberen Abschnitt eine erste Nut und auf einer gegenüberliegenden Fläche in dem oberen Abschnitt eine zweite Nut für die Aufnahme des Betätigers vorgesehen sein kann.

Dazu ist der Betätiger vorteilhafterweise U-förmig ausgebildet und weist einen ersten Schenkel, der in der ersten Nut des Sperrbolzen aufnehmbar ist, einen zweiten Schenkel, der in der zweiten Nut des Sperrbolzen aufnehmbar ist, und eine Anlauffläche, die an die beiden Schenkel angrenzt und mit diesen einstückig verbunden ist, auf. Der Betätiger kann dabei als kostengünstiges Stanzteil ausgebildet sein.

Um eine Montagesicherheit bereitzustellen, ist vorteilhafterweise die erste Nut verschieden von der zweiten Nut des Sperrbolzens und der erste Schenkel verschieden von dem zweiten Schenkel des Betätigers ausgestaltet. Beispielsweise kann eine Nut als Sacknut und die andere Nut als Durchgangsnut ausgebildet sein. Hierdurch wird eine eindeutige, komplementäre, Montageposition des Betätigers mit dem Sperrbolzen ermöglicht.

Vorteilhafterweise ist die stirnseitige Anlauffläche des Betätigers konkav gewölbt und ermöglicht somit eine verbesserte Eingriffsfläche des Betätigers mit der Hubkurve des Antriebsrads.

Um den Verschleiß und Reibgeräusche zwischen der Hubkurve des Antriebsrads und des Betätigers zu verringern, weist die stirnseitige Anlauffläche des Betätigers, die mit der Hubkurve im Eingriff steht, vorteilhafterweise seitlich eine aufgestellte Wölbung auf.

Vorteilhafterweise umfasst der Sperrbolzen für einen störungsfreien Betrieb in Richtung des Antriebsrades eine Sicherungsnut, und das Antriebsrad eine dazu komplementäre sich radial erstreckende, kreissegment- oder fächerförmige Sperrfläche, die vorzugsweise einen größeren Durchmesser als die Verzahnung aufweist und über diese radial hervorsteht. Im unverriegelten Zustand der elektrischen Lenkverriegelung greift die Sperrfläche in die Sicherungsnut sichernd ein. Erst bei einer Verriegelungsbetätigung schwenkt die Sperrfläche aus der Sicherungsnut heraus. Hierdurch wird beispielsweise eine unbeabsichtigte Lenkverriegelung während der Fahrt sicher vermieden.

Um einen minimalen Raumbedarf zu erreichen, bzw. den Abstand zwischen Sperrbolzen und Antriebsrad zu reduzieren, weist der Sperrbolzen in Richtung des Antriebsrades eine Freilaufnut für die Sperrfläche das Antriebsrads auf, und stellt somit eine integral ausgebildete Verriegelungs- und Entrieglungs-Funktionalität zur Verfügung. Hierdurch sind mehrere Umdrehungen des Antriebsrads möglich, ohne dass hierbei die Sperrfläche bereits in die Sicherungsnut am Sperrbolzen eingreift.

Vorteilhafterweise kann die o. g. elektrische Lenkverriegelung in Fahrzeugen mit unterschiedlichen Lenkachspositionen bzw. -stellungen verwendet werden. D.h., je nach Fahrzeugtyp wird eine andere Position der Sperrlagerung verwendet, ohne von der Basiskonstruktion abzuweichen. Durch diesen quasi modularen Aufbau lassen sich bedeutende Einsparungen bei der Konstruktion und Entwicklung sowie bei der Lager- und Ersatzteilhaltung erzielen.

### Kurze Beschreibung der Zeichnungen

Nachfolgend wird die Erfindung anhand mehrerer Ausführungsbeispiele zusammen mit den beigefügten Zeichnungen erläutert. Dazu zeigt:
Figur 1 eine schematische Draufsicht einer elektrischen Lenkverriegelung gemäß einer ersten, zweiten und dritten Ausführungsform der vorliegenden Erfindung;
Figur 1a eine schematische Draufsicht einer elektrischen Lenkverriegelung gemäß einer vierten Ausführungsform der vorliegenden Erfindung;
Figur 2 eine perspektivische Ansicht eines Sperrbolzens gemäß einer zweiten Ausführungsform;
Figur 3 eine perspektivische Ansicht eines Sperrbolzen gemäß einer ersten und dritten Ausführungsform;
Figur 4 eine Draufsicht eines Betätigers gemäß einer ersten Ausführungsform;
Figur 5 eine Draufsicht eines Betätigers gemäß einer zweiten und dritten Ausführungsform;
Figur 6 eine Draufsicht eines Betätigers und eines Sperrbolzen mit angedeutetem Verlauf der Nuten des Sperrbolzens gemäß einer ersten bis fünften Ausführungsform;
Figur 7 eine Draufsicht eines Sperrbolzen mit angedeutetem Verlauf der Nuten des Sperrbolzens gemäß einer ersten bis fünften Ausführungsform;
Figur 8 eine Draufsicht eines Betätigers und eines Sperrbolzen in einer zweiten Ausführungsform:
Figur 9 eine Draufsicht auf ein Antriebsrad;
Figur 10 eine perspektivische Explosionsansicht der elektrischen Lenkverriegelung; und
Figur 11 eine perspektivische Explosionsansicht der elektrischen Lenkverriegelung mit weiteren Bauteilen;

Nachfolgend beziehen sich Richtungsangaben auf die Zeichnungsebene sofern sich aus dem Text nichts anderes ergibt.

### Detaillierte Beschreibung einer ersten Ausführungsform

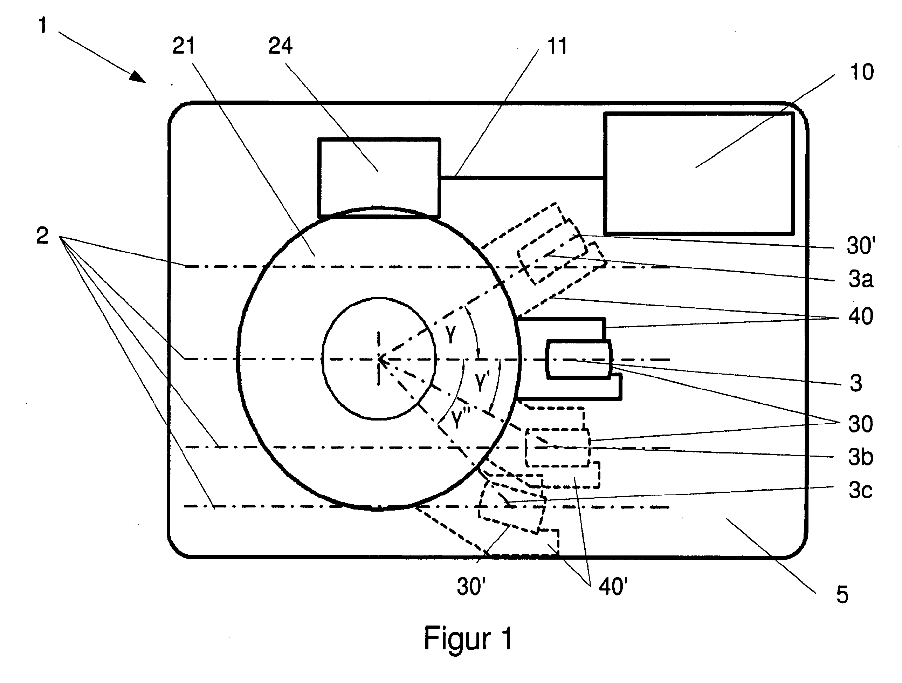

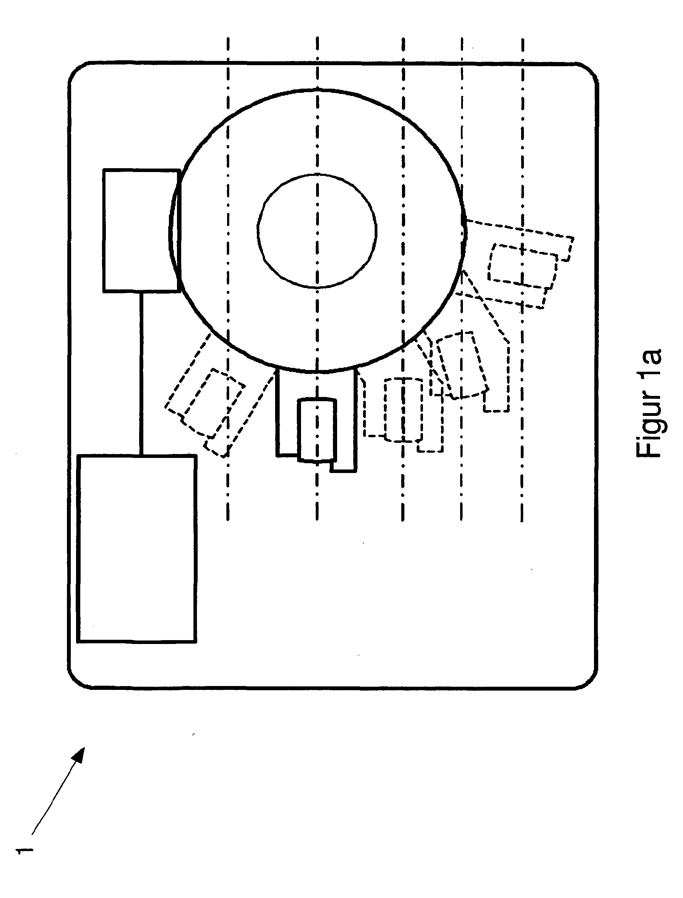

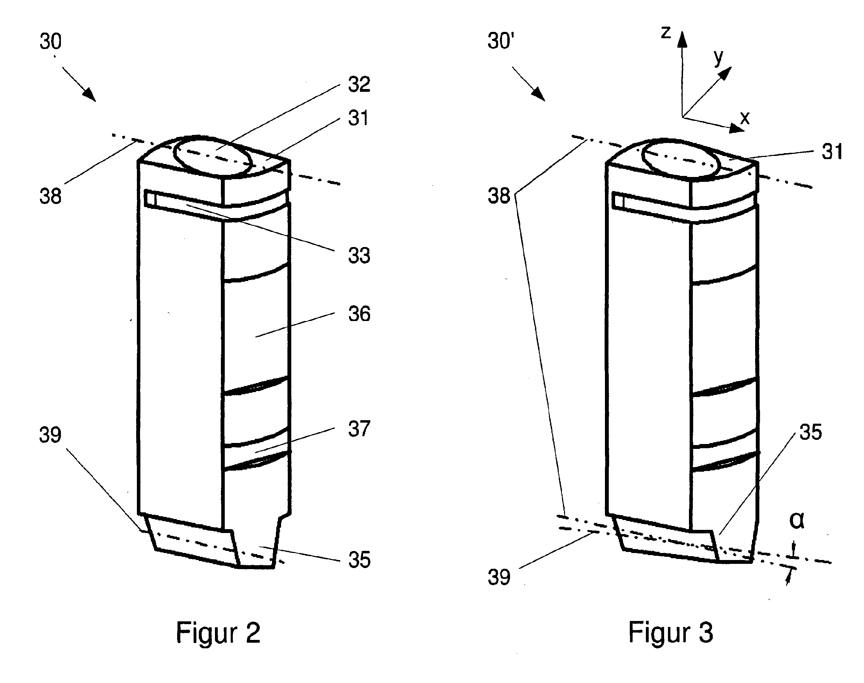

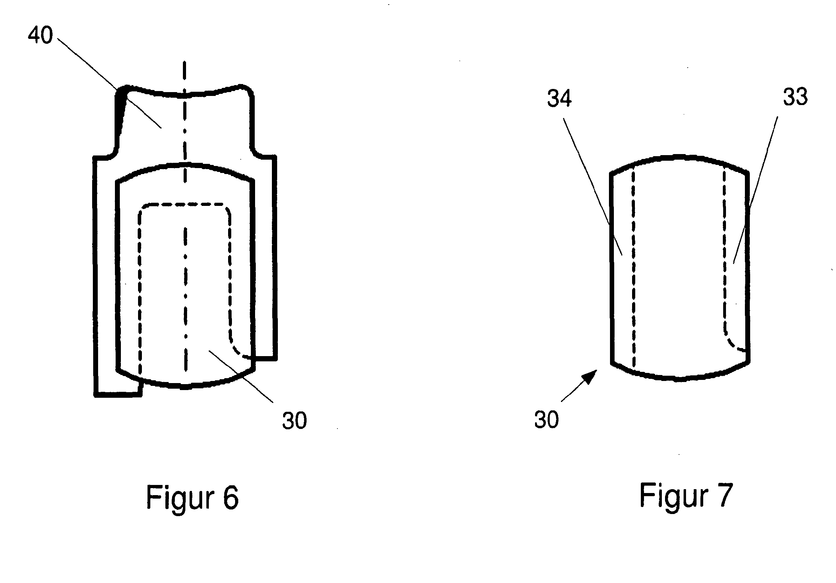

Die Figuren 1, 3, 4, 6, 7, 9 und 10 zeigen schematisch eine erste Ausführungsform einer elektrischen Lenkverriegelung 1 für ein Fahrzeug, die mit einfachen Modifikationen an unterschiedliche Einbaulagen in Bezug auf eine Lenkachsenlage 2 angepasst werden kann. Dabei bezieht sich die erste Ausführungsform auf die in Figur 1 mit 3a markierte Einbauposition.

Wie in Figur 1 zu sehen, weist die elektrische Lenkverriegelung 1 in der ersten Ausführungsform eine Grundplatte 5, einen Motor 10 mit einer Antriebswelle 11 und Getrieberad 24, ein Antriebsrad 21, Sperrbolzenlagerung 3a einen Sperrbolzen 30' und einen Betätiger 40 auf. Die Sperrbolzenlagerung 3a ist integral und zentral in dieser ersten Ausführungsform in der Grundplatte 5 ausgebildet, welche im Spritzgussverfahren aus einem glasfaserverstärkten Kunststoff, hier PBT, hergestellt ist. Die Sperrbolzenlagerung 3a hat im Wesentlichen eine längliche rechteckige, ovale bzw. ringförmige Ausgestaltung und durchdringt die Grundplatte 5 senkrecht mit ihrem unteren Ende. Eine Innenfläche ist entsprechend zur Führung und Aufnahme des Sperrbolzen 30' im Wesentlichen glatt ausgebildet und stellt eine spiel- und verschleißfreie Führung des Sperrbolzen zur Verfügung.

Des weiteren sind noch Lagerungen für den Motor 10, die Antriebswelle 11 und das Getrieberad 24 integral in der ansonsten im Wesentlichen ebenen Grundplatte 5 ausgebildet. Der Motor 10 treibt über die Antriebswelle 11 das Getrieberad 24 an, das als Schneckengetriebe in dieser Ausführungsform ausgebildet ist, und das Antriebsrad 21 dreht. In dieser Ausführungsform ist das Getrieberad 24 schraubenförmig ausgebildet und dreht bei Rotation ein in dieses mittels Zahnkranz eingreifendes Antriebsrad 21. Damit wird eine hohe Übersetzung auf engstem Raum bei gleichzeitig geräuscharmen Verzahnungsantrieb realisiert. Das Antriebsrad 21 weist in seiner axialen Achse eine Bohrung zur Aufnahme einer Achse auf, die in der Grundplatte 5 gelagert wird. Dabei befindet sich im am Fahrzeug montiertem Zustand der Lenkverriegelung die Achse des Antriebsrads 21 außerhalb der Lenksäulenachse, das heißt, beide Achsen schneiden sich nicht. Auf der Außenfläche des Antriebsrads 21 ist in einem unteren Abschnitt eine bogenförmige, im wesentlichen parallel zur Grundplatte 5 ausgerichtete fächerförmige Sperrfläche 21 b vorgesehen. Diese Sperrfläche 21 b ist in dieser Ausführungsform vorzugsweise parallel zur Grundplatte 5 integral am Antriebsrad ausgebildet und erstreckt sich über ein Bogensegment von 120° in radialer Richtung. Die Wandstärke entspricht hierbei im Wesentlichen dem zu sichernden Eingriffsgegenstück. In einem mittleren Abschnitt auf der Außenfläche des Antriebsrads ist eine Verzahnung 21c radial ausgebildet. Dadurch ist ein verzahnender Eingriff des schraubenförmig ausgebildeten Getrieberads 21 möglich. Diese Verzahnung ist ebenfalls integral mit dem Antriebsrad 21 ausgebildet. Dabei ist der Durchmesser der Verzahnung 21 c geringer als der Durchmesser der Sperrfläche 21 b, so dass die Sperrfläche 21 b radial überstehend gegenüber der Verzahnung 21 c ausgeführt ist. Angrenzend an den mittleren Abschnitt ist in einem oberen Abschnitt des Antriebsrads 21 eine sich um mehr als 360° erstreckende Hubkurve 21a spiralförmig ausgebildet. D.h., das Antriebsrad benötigt mehr als eine Umdrehung, um einen vollen Hub des Sperrbolzens auszuführen. Diese Hubkurve 21a erstreckt sich wiederum an der Außenfläche des Antriebsrads 21 und ist damit integral ausgebildet. Des weiteren ist in diesem oberen Abschnitt ein Drehimpulsgeber 21 d, als Teil eines fotoelektrischen Impulsgeber angeordnet. Dazu sind radial um die Achse des Antriebsrades 21 gleichmäßig verteilte Erhebungen 21d integral ausgebildet. Dadurch kann ein fotoelektrischer Drehimpulsgeber den Drehwinkel bzw. die aktuelle Stellung des Antriebsrad und somit auch die aktuelle Stellung der Hubkurve erfassen. Dadurch kann eindeutig eine Aussage über den Ver- bzw. Entriegelungsstatus getroffen werden.

In der Sperrbolzenlagerung 3a wird der Sperrbolzen 30' im Wesentlichen spielfrei und translatorisch entlang seiner Hochachse geführt. Dabei weist der Sperrbolzen 30' im Wesentlichen einen länglichen, rechteckförmig Querschnitt mit entsprechender Längs- und Querachse auf. Zwei gegenüberliegende Seitenflächen sind dabei im Wesentlichen nach außen gewölbt, d.h. konvex ausgebildet. Die beiden Seitenflächen sind plan ausgebildet. In einem oberen Abschnitt weist der Sperrbolzen 30' jeweils zwei uneinheitliche Nuten 33 und 34 auf den zwei gegenüberliegenden planen Seitenflächen auf. Auf einer der beiden gewölbten zum Antriebsrad 21 weisenden Flächen ist noch eine die beiden Nuten 33 und 34 verbindende Quernut ausgebildet. Diese drei Nuten ermöglichen eine verwechslungssichere bzw. fail safe Montage des Betätigers 40, da sich alle drei Nuten unterscheiden.

Unterhalb der verbindenden Quernut ist auf der gewölbten Fläche, eine Freilaufnut 36 ausgebildet. Dabei entspricht die Länge bzw. Höhe der Freilaufnut 36 dem Hub der Hubkurve 21a des Antriebsrades 21 und ermöglicht eine translatorische Bewegung des Sperrbolzens 30', wenn die Sperrfläche 21 a des Antriebsrades 21 in Richtung des Sperrbolzens 30' während eines Ver- bzw. Entriegelungsvorgangs geschwenkt wird und die Freilaufnut 36 kreuzt. Dies ist dann der Fall, wenn mehr als eine Umdrehung des Antriebsrads für den vollen Hub des Sperrbolzens erforderlich sind. Unterhalb dieser Freilaufnut 36 weist der Sperrbolzen 30' eine Sicherungsnut 37 auf. In einer entriegelten Position des Sperrbolzen 30' befindet sich dieser über die Sicherungsnut 37 in Eingriff mit der Sperrfläche 21 b des Antriebsrads 21. Im Wesentlichen entspricht dazu die Länge bzw. Höhe der Sicherungsnut 37 der Wandstärke der Sicherungsfläche 21 b. Damit wird eine mechanische Verriegelung zwischen dem Sperrbolzen 30' und dem Antriebsrad 21 bewirkt und somit einer Fehlfunktion der elektrischen Lenkverriegelung, gegen ein plötzliches Verriegeln, entgegengewirkt.

An einem unteren Abschnitt des Sperrbolzen 30' befindet sich ein im Wesentlichen keil- bzw. kufenförmiger Abschnitt 35. Dieser Abschnitt 35 weist eine untere Längsachse 39 auf und befindet sich zur Verriegelung im Eingriff mit einer Lenksäule. Dieser keilförmige Abschnitt 35 ist dabei zu einer Lenksäulenachse 2 ausgerichtet, um einen optimalen verriegelnden Eingriff in einen an der Lenksäule angebrachten Nutenkranz bewirken zu können. Aufgrund dieser Ausrichtung des unteren keilförmigen Abschnitts 35 in Richtung zur Lenksäulenachse 2, weist eine erste Längsachse 38 in einem oberen Abschnitt des Sperrbolzen 30' eine Verdrehung um den Winkel α gegenüber der zweiten unteren Längsachse 39 auf. Zur Verbesserung der Maßhaltigkeit der aufwendigen Geometrien bei gleichzeitiger Massenproduktion wird der Sperrbolzen 30' im vorliegenden Ausführungsbeispiel im Sinterverfahren aus einem Sinterstahl wie D32 gefertigt.

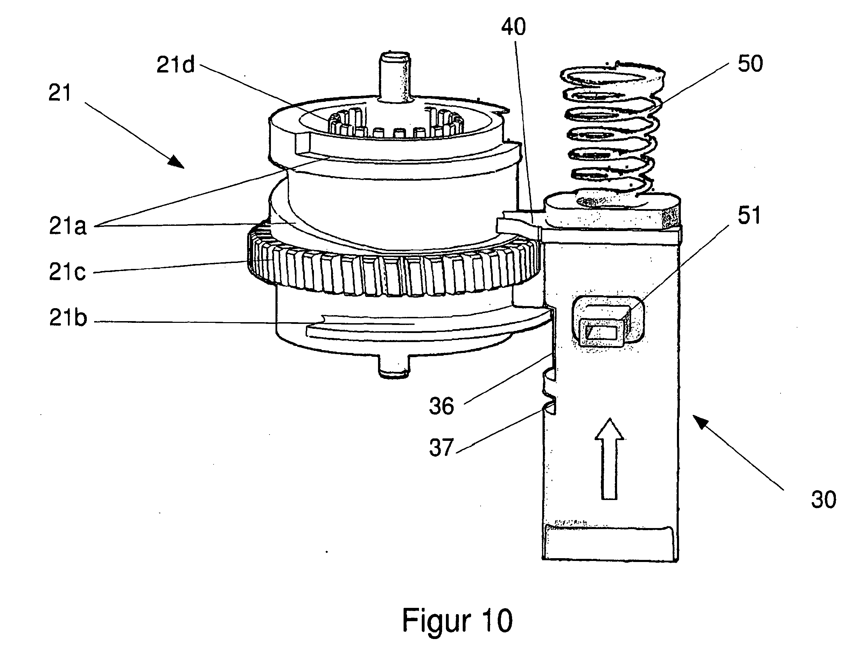

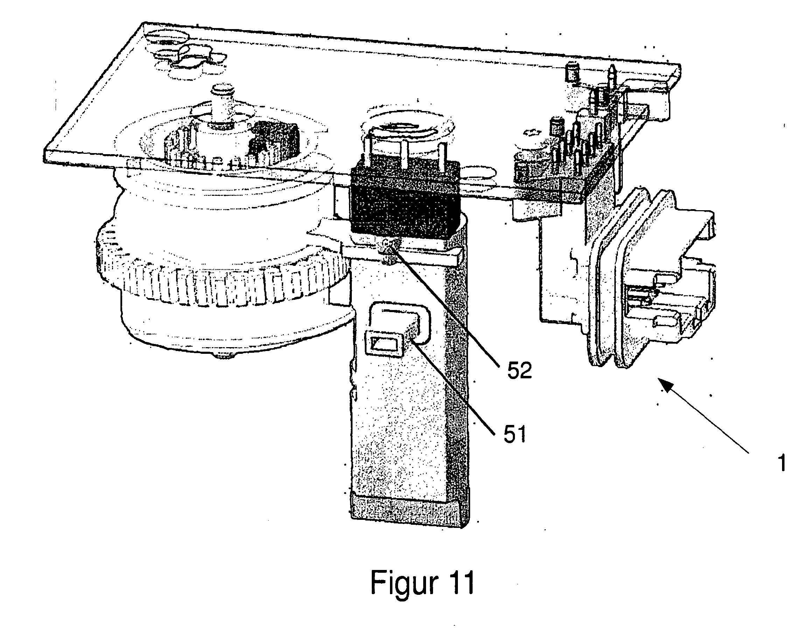

In Figur 11 wird perspektivisch noch die Anbringung eines Mikroschalters 52 gezeigt, der zur Abschaltung der elektrischen Lenkverriegelung bei Erreichung einer entriegelten Position und gleichzeitig gesicherter Stellung dient, die durch das Einschwenken der Sperrfläche 21 b in die Sicherungsnut 37 erreicht wird. Ebenfalls wird hierbei die Anbringung eines dafür erforderlichen Aktuators 51 ersichtlich. Des weiteren werden aus Figur 10 auch die unterschiedlichen Radien der Sperrfläche 21 b und des Getrieberads 21c ersichtlich. In dieser Darstellung ist auch die Positionierung einer Feder 50 in einer auf der Oberseite des Sperrbolzen 30' als Sackloch ausgebildeten Federlagerung 32 offenbart. Der Betätiger ist im wesentlichen U-förmig ausgebildet, mit zwei in Form und Länge unterschiedlich ausgebildeten Schenkeln 43, 44, und einem die beiden Schenkel 43, 44 verbindenden Abschnitt. Dieser Abschnitt weist stirnseitig eine nach innen gewölbte, konkave, Fläche 42 auf, um eine größere Kontaktfläche mit der Hubkurve 21 a zu realisieren. Des weiteren weist der Abschnitt auf der ansteigenden der Hubkurve zugewandten Seite eine Wölbung zur Reduzierung des Anlaufmoments, des Drehmoments, des Verschleißes und der Geräuschentwicklung auf. Der Betätiger 40 ist mit seinen beiden unterschiedlichen Schenkeln 43, 44 und dem verbindenden Abschnitt mit dem Sperrbolzen in den Nuten 33, 34 und der Verbindungsnut eindeutig und montagesicher, sowie verwechslungsfrei und ohne zusätzliche Bauteile montierbar. In dieser Ausführungsform ist der Betätiger 40 als Stanzbiegeteil aus Stahl hergestellt. Dies ermöglicht eine Massenproduktion und führt zu einem kostengünstigen und zugleich haltbaren Bauteil.

In montiertem Zustand befindet sich der Betätiger 40 im Eingriff mit dem Antriebsrad 21 und der Hubkurve 21a. Der Betätiger 40 wiederum ist mit dem Sperrbolzen 30' in dem oberen Abschnitt im Eingriff und überträgt somit die Drehbewegung des Antriebsrads mittels der Hubkurve in eine translatorische Bewegung und überträgt diese auf den Sperrbolzen 30'. Somit wird der keilförmige untere Abschnitt 35 des Sperrbolzen 30' in Eingriff mit der Lenksäule gebracht. Durch die Verdrehung des unteren Abschnitts 35 wird ein optimaler Eingriff des Sperrbolzen zur Verfügung gestellt, d.h. die Lenksäulenachse 2 weist eine im wesentlichen gleiche Achsausrichtung wie die zweite Längsachse 39, also des unteren keilförmigen Abschnitts wie der Sperrbolzen 30' auf. In Figur 1 wird diese Position mit 3a bezeichnet. Ein in Figur 1 dargestellter Versatz-Winkel γ entspricht in dieser Ausführungsform der Verdrehung α.

### Zweite Ausführungsform

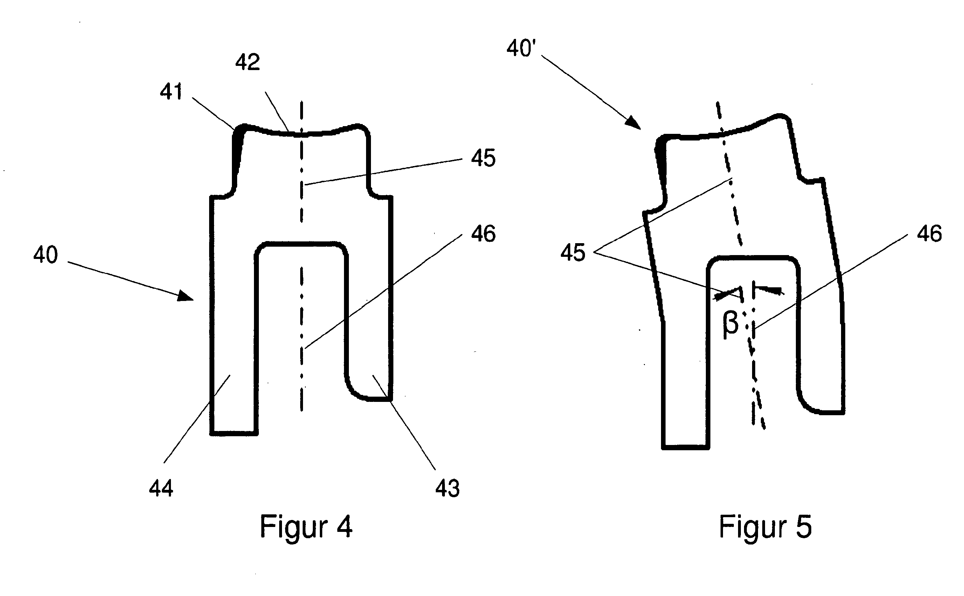

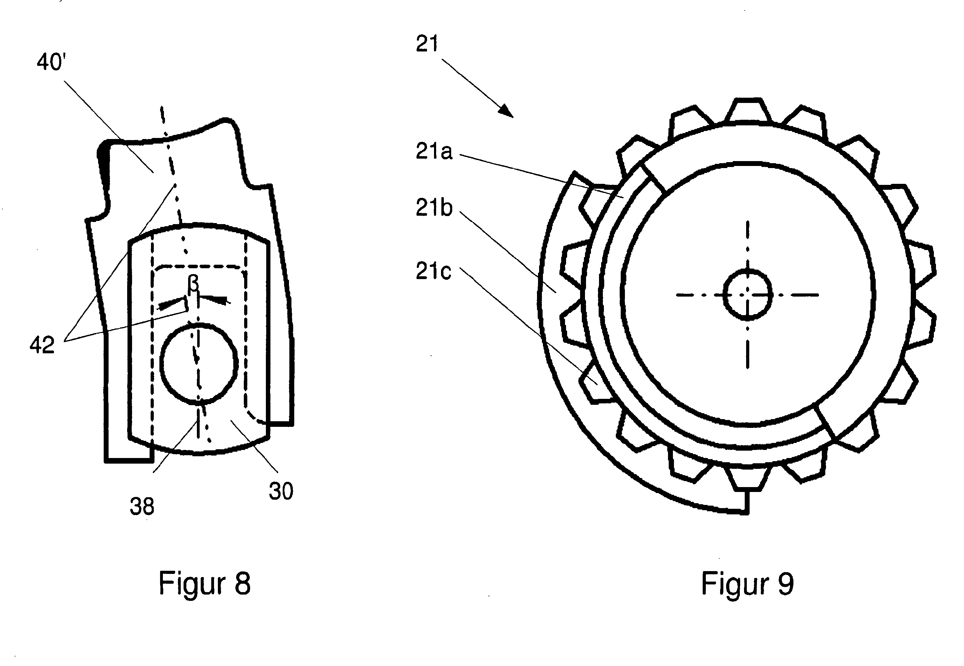

In einer zweiten Ausführungsform wird ein Sperrbolzen 30 verwendet, in dessen oberen Abschnitt 31 eine erste Längsachse 38, die im wesentlichen mit dem Radius des Antriebsrads 21 zusammenfällt, mit einer zweiten Längsachse 39 in dessen unteren Abschnitt 35 fluchtet. Somit ist die erste Längsachse 38 im wesentlichen parallel zur zweite Längsachse 39 ausgerichtet und der Sperrbolzen 30weist keine Verdrehung wie der Sperrbolzen 30' im ersten Ausführungsbeispiel auf. Um hierbei einen optimalen Eingriff des Sperrbolzen 30 in den Nutenkranz einer Lenksäule zu ermöglichen, weist der Betätiger 40', wie aus Figur 1 und 8 ersichtlich, eine Verdrehung einer vorderen Anlauffläche 42 des Betätigers um einen Winkel β gegenüber der ersten Längsachse 39 des Sperrbolzen 30 auf. Diese Position wird in Figur 1 mit der Position 3b bezeichnet. Auch hierbei wird erreicht, dass sich der Sperrbolzen 30 in mehreren optionalen Positionen, optimal ausgerichtet gegenüber einer Lenksäulenachse 2b befindet und einen optimalen sperrenden Eingriff in die Lenksäule durchführen kann, ohne verschiedene Varianten des Sperrbolzen 30 zu benötigen. Vielmehr genügt hier die modular aufgebaute Lenkverriegelung gemäß der vorliegenden Erfindung. Der Winkelausgleich erfolgt dabei allein durch die Verdrehung des Betätigers 40', wie in Figur 5 dargestellt. Aus Figur 1 ist hierbei ersichtlich, dass ein Versatzwinkel γ', in dieser Ausführungsform im wesentlichen dem Winkel β entspricht.

### Dritte Ausführungsform

In dieser dritten Ausführungsform wird, wie in Figur 1 für eine Position 3c dargestellt, eine Kombination aus der ersten und zweiten Ausführungsform verwendet. Damit lassen sich ohne weiteres aus einem Sperrbolzen 30' und einem Betätiger 40' weitere optionale Positionen zu einer Lenksäulenachse 2 besetzen, und somit ein weiter Bereich ohne zusätzliche Varianten der Bauteile Sperrbolzen 30' und Betätiger 40' abdecken. In diesem Fall entspricht ein in Figur 1 dargestellter Versatzwinkel γ" der Summe der einzelnen Verdrehwinkel α und β des Sperrbolzen 30' und des Betätigers 40'.

### Vierte Ausführungsform

In einer vierten Ausführungsform wird die zentral-mittige Lage der Sperrbolzenlagerung 3, 3a, 3b 3c zu Gunsten einer zentralen Lagerung eines Antriebsrads 21 verlassen, wie aus Figur 1a ersichtlich. Damit werden weitere optionale Positionen zur Anbringung und Betätigung eines Sperrbolzen 30, 30' möglich.

Die hier beschriebenen vorteilhaften Ausführungsformen dienen lediglich der Erläuterung und stellen keine Einschränkung des Schutzumfangs dar.

So könnten beispielsweise in einer weiteren Ausführungsform, die mit den Ausführungsformen eins bis vier kombiniert wird, mehrere Sperrbolzenlagerungen 3, 3a, 3b, 3c integral ausgebildet in einer Grundplatte 5 sein. Dabei durchdringen die Sperrbolzenlagerungen 3, 3a, 3b, 3c die Grundplatte 5. Damit kann eine Bauform der Grundplatte 5 den gesamten geforderten abzudeckenden Bereich unterschiedlicher Lenksäulenachsen abdecken.

In einer nicht gezeigten abgewandelten Ausführungsform ist ein Sperrbolzen (30, 30') als Drehteil aus C45 ausgebildet.

In weiteren Ausführungsformen sind für einen Sperrbolzen sowohl weitere geometrische Formen wie, Würfel, Zylinder, etc., als auch andere Materialien wie Aluminium, faserverstärkter Kunststoffe etc., denkbar. Auch eine integrale Ausführung eines Betätigers mit dem Sperrbolzen ist denkbar.

In anderen Ausführungsformen sind für einen Betätiger sowohl weitere geometrische Formen wie, Zylinder, Kugel, Quader etc., als auch andere Materialien wie Aluminium, Kunststoffe etc., denkbar.

In einer nicht gezeigten abgewandelten Ausführungsform ist ein Antriebsrad aus einem faserverstärkten Kunststoff im Spritzgussverfahren hergestellt. Aber auch andere Materialien wie Aluminium, Stahlsorten, C45 etc., sind denkbar.

Des weiteren kann in einer weiteren Ausführungsform ein Sperrbolzen dreiteilig ausgeführt sein, mit einem oberen Abschnitt, einem unteren keilförmigen Abschnitt und einem die beiden Abschnitte verbindenden Rastelement. Dabei weisen die beiden dem Rastelement zugewandten Oberflächen des oberen und unteren Abschnittes jeweils eine Verzahnung für einen rastförmigen Eingriff mit dem Rastelement auf. Damit würde es nur einer Bauform zur Abdeckung eines großes Bereiches benötigen.

### Bezugszeichenliste

- 1: Elektrische Lenkverriegelung
- 2: Lenksäulenachse
- 3: Sperrbolzenlagerung
- 3a, 3b, 3c: optionale Sperrbolzenlagerung
- 4: Aussparung (in der Lenkradsäule)
- 5: Grundplatte
- 6: Antrieb
- 10: Motor
- 11: Antriebswelle
- 20: Getriebe
- 21: Antriebsrad
- 21a: Hubkurve
- 21b: Sperrfläche
- 21c: Verzahnung
- 21d: Erhebungen (für Drehimpulsgeber)
- 24: Getrieberad
- 25: Durchlass
- 30, 30': Sperrbolzen
- 31: oberer Abschnitt
- 32: Federlagerung
- 33: erste Nut
- 34: zweite Nut
- 35: unterer keilförmiger Abschnitt
- 36: Freilaufnut
- 37: Sicherungsnut
- 38: erste Längsachse
- 39: zweite Längsachse
- 40, 40': Betätiger
- 41: Wölbung
- 42: Anlauffläche
- 43: erster Schenkel
- 44: zweiter Schenkel
- 45: erste Achse
- 46: zweite Achse
- 50: Feder
- 51: Aktuator für Mikroschalter
- 52: Mikroschalter

## Patentansprüche

1. Elektrische Lenkverriegelung (1) für ein Fahrzeug, welche folgendes aufweist:
eine Grundplatte (5),
einen auf der Grundplatte (5) angebrachten Motor (10) mit Antriebswelle (11) und Getrieberad (24),
ein Antriebsrad (21) mit außen liegender Hubkurve (21a) und einer Verzahnung (21 c), die mit dem Getrieberad (24) im Eingriff steht,
eine Sperrbolzenlagerung (3, 3a, 3b, 3c),
einen Sperrbolzen (30, 30') zum Verriegeln einer Lenksäulenachse (2), der über einen Betätiger (40, 40') mit der Hubkurve (21 a) des Antriebsrades (21) im Eingriff steht,
**dadurch gekennzeichnet, dass**
auf der Grundplatte (5) mehrere optionale Positionen der Sperrbolzenlagerung (3, 3a, 3b, 3c) um das Antriebsrad (21) herum vorgesehen sind, die Sperrbolzenlagerung (3, 3a, 3b, 3c) die Grundplatte (5) durchdringt,
die Lenksäulenachse (2) außerhalb der Achse des Antriebsrads (21) angeordnet ist, und abhängig von der Position der Sperrbolzenlagerung (3, 3a, 3b, 3c)
der Sperrbolzen (30, 30') einen in der Sperrbolzenlagerung (3, 3a, 3b, 3c) geführten oberen Abschnitt (31) mit einer ersten Längsachse (38) aufweist, die im wesentlichen mit dem Radius des Antriebsrads (21) zusammenfällt, und einen unteren im wesentlichen keilförmigen Abschnitt (35) mit einer zweiten Längsachse (39) aufweist, wobei der untere Abschnitt (35) gegenüber dem oberen Abschnitt (31) um einen Winkel α verdreht ist, und/oder
der Betätiger (40, 40') in einem Winkel β zur ersten Längsachse (38) des Sperrbolzens (30, 30') angeordnet ist.

2. Elektrische Lenkverriegelung (1) nach Anspruch 1, wobei ein Versatzwinkel γ zwischen der Längsachse (38) des Sperrbolzens (30, 30') und der Lenksäulenachse (2) der Summe der Winkel α und Winkel β entspricht.

3. Elektrische Lenkverriegelung (1) nach einem der vorhergehenden Ansprüche, wobei die Grundplatte (5) mehrere die Grundplatte (5) durchdringende Sperrbolzenlagerungen (3, 3a, 3b, 3c) aufweist.

4. Elektrische Lenkverriegelung (1) nach einem der vorhergehenden Ansprüche, wobei der Sperrbolzen (30, 30') federbelastet ist.

5. Elektrische Lenkverriegelung (1) nach einem der vorhergehenden Ansprüche, wobei der Sperrbolzen (30, 30') am oberen Abschnitt (31) eine Aufnahme für einen Betätiger (40, 40') aufweist.

6. Elektrische Lenkverriegelung (1) nach einem der vorhergehenden Ansprüche, wobei der Betätiger (40, 40') U-förmig ausgebildet ist und folgendes aufweist:
einen ersten Schenkel (43), der in einer ersten Nut (33) des Sperrbolzen (30, 30') aufnehmbar ist,
einen zweiten Schenkel (44), der in einer zweiten Nut (34) des Sperrbolzen (30, 30') aufnehmbar ist, und
eine Anlauffläche (42), die an die beiden Schenkel (43, 44) angrenzt und mit diesen einstückig verbunden ist.

7. Elektrische Lenkverriegelung (1) nach einem der vorhergehenden Ansprüche, wobei die erste Nut (33) verschieden von der zweiten Nut (34) des Sperrbolzens (30, 30') und der erste Schenkel (43) verschieden von dem zweiten Schenkel (44) des Betätigers (40, 40') ausgestaltet ist.

8. Elektrische Lenkverriegelung (1) nach einem der vorhergehenden Ansprüche, wobei eine stirnseitige Anlauffläche (42) des Betätigers (40) konkav gewölbt ist.

9. Elektrische Lenkverriegelung (1) nach einem der vorhergehenden Ansprüche, wobei die stirnseitige Anlauffläche (42) seitlich aufgestellt ist.

10. Elektrische Lenkverriegelung (1) nach einem der vorhergehenden Ansprüche, wobei der Sperrbolzen (30) in Richtung des Antriebsrades (21) eine Sicherungsnut (37), und das Antriebsrad (21) eine sich radial erstreckende, fächerförmige Sperrfläche (21 b) umfasst, aufweist, wobei im unverriegelten Zustand der elektrischen Lenkverriegelung die Sperrfläche (21 b) in die Sicherungsnut (37) eingreift.

11. Elektrische Lenkverriegelung (1) nach einem der vorhergehenden Ansprüche, wobei der Sperrbolzen (30, 30') in Richtung des Antriebsrades (21) eine Freilaufnut (36) für die Sperrfläche (21 b) das Antriebsrads (21) aufweist.

12. Verwendung der elektrische Lenkverriegelung (1) nach einem der vorhergehenden Ansprüche in Fahrzeugen mit unterschiedlichen Lenkachspositionen bzw. -stellungen.

## Claims

1. Electric steering lock (1) for a vehicle, which comprises the following:
- a base plate (5),
- a motor (10) mounted on the base plate (5) and having a drive shaft (11) and a gear wheel (24),
- a drive wheel (21) with an external lifting cam (21a) and a gearing (21c) which engages with the gear wheel (24),
- a locking bolt bearing (3, 3a, 3b, 3c),
- a locking bolt (30, 30') for locking a steering column axle (2), which bolt engages via an actuator (40, 40') with the lifting cam (21a) of the drive wheel (21),
**characterised in that** on the base plate (5) a plurality of optional positions of the locking bolt bearing (3, 3a, 3b, 3c) are provided around the drive wheel (21), the locking bolt bearing (3, 3a, 3b, 3c) passes through the base plate (5), the steering column axle (2) is disposed outside the axis of the drive wheel (21), and depending upon the position of the locking bolt bearing (3, 3a, 3b, 3c) the locking bolt (30, 30') has an upper section (31) which is guided in the locking bolt bearing (3, 3a, 3b, 3c) and has a first longitudinal axis (38) which substantially coincides with the radius of the drive wheel (21), and a lower substantially wedge-shaped section (35) with a second longitudinal axis (39), wherein the lower section (35) is rotated relative to the upper section (31) by an angle α, and/or the actuator (40, 40') is disposed at an angle β to the first longitudinal axis (38) of the locking bolt (30, 30').

2. Electric steering lock (1) according to Claim 1, wherein an offset angle γ between the longitudinal axis (38) of the locking bolt (30, 30') and the steering column axle (2) corresponds to the sum of the angle α and the angle β.

3. Electric steering lock (1) according to one of the preceding claims, wherein the base plate (5) has a plurality of locking bolt bearings (3, 3a, 3b, 3c) which pass through the base plate (5).

4. Electric steering lock (1) according to one of the preceding claims, wherein the locking bolt (30, 30') is spring-loaded.

5. Electric steering lock (1) according to one of the preceding claims, wherein the locking bolt (30, 30') has on the upper section (31) a receptacle for an actuator (40, 40').

6. Electric steering lock (1) according to one of the preceding claims, wherein the actuator (40, 40') is U-shaped and has the following:
- a first arm (43) which can be received in a first groove (33) of the locking bolt (30, 30'),
- a second arm (44) which can be received in a second groove (34) of the locking bolt (30, 30'), and
- a lead-in surface (42) which adjoins the two arms (43, 44) and is integrally connected thereto.

7. Electric steering lock (1) according to one of the preceding claims, wherein the first groove (33) is configured differently from the second groove (34) of the locking bolt (30, 30') and the first arm (43) is configured differently from the second arm (44) of the actuator (40, 40').

8. Electric steering lock (1) according to one of the preceding claims, wherein a lead-in surface (42) on the end face of the actuator (40) has a concave curvature.

9. Electric steering lock (1) according to one of the preceding claims, wherein the lead-in surface (42) on the end face is positioned laterally.

10. Electric steering lock (1) according to one of the preceding claims, wherein the locking bolt (30) has a securing groove (37), and the drive wheel (21) comprises a radially extending, fan-shaped blocking surface (21b), wherein in the unlocked state of the electric steering lock the blocking surface (21b) engages in the securing groove (37).

11. Electric steering lock (1) according to one of the preceding claims, wherein the locking bolt (30, 30') has in the direction of the drive wheel (21) a freewheel groove (36) for the blocking surface (21b) of the drive wheel (21).

12. Use of the electric steering lock (1) according to one of the preceding claims in vehicles with different steering axle positions or settings.

## Revendications

1. Verrou de direction électrique (1) pour un véhicule, présentant
une plaque de base (5),
un moteur (10) avec arbre d'entraînement (11) et roue dentée (24) disposé sur la plaque de base (5),
une roue d'entraînement (21) avec came de levage (21a) disposée à l'extérieur et une denture (21c) qui est en prise avec la roue dentée (24),
un palier de pêne (3, 3a, 3b, 3c),
un pêne (30, 30') pour le verrouillage d'une colonne de direction (2) qui est en prise avec la roue d'entraînement (21) via un dispositif d'actionnement (40, 40'),
**caractérisé en ce que**
plusieurs positions optionnelles du palier de pêne (3, 3a, 3b, 3c) autour de la roue d'entraînement (21) sont prévues sur la plaque de base (5),
le palier de pêne (3, 3a, 3b, 3c) traverse la plaque de base (5),
la colonne de direction (2) est disposée à l'extérieur de l'axe de la roue d'entraînement (21),
et qu'indépendamment de la position du palier de pêne (3, 3a, 3b, 3c),
le pêne (30, 30') présente une section supérieure (31) disposée dans le palier de pêne (3, 3a, 3b, 3c) avec un axe longitudinal (38) correspondant essentiellement au rayon de la roue d'entraînement (21) et une section inférieure (35) présentant essentiellement une forme de coin avec un second axe longitudinal (39), la section inférieure (35) étant torsadée selon un angle α par rapport à la section supérieure (31), et/ou
le dispositif d'actionnement (40, 40') est positionné selon un angle β par rapport au premier axe longitudinal (38) du pêne (30, 30').

2. Verrou de direction électrique (1) selon la Revendication 1, dans lequel un décalage angulaire γ entre l'axe longitudinal (38) du pêne (30, 30') et la colonne de direction (2) correspond à la somme des angles α et β.

3. Verrou de direction électrique (1) selon l'une quelconque des Revendications précédentes, dans lequel la plaque de base (5) présente plusieurs paliers de pêne (3, 3a, 3b, 3c) traversant la plaque de base (5).

4. Verrou de direction électrique (1) selon l'une quelconque des Revendications précédentes, dans lequel le pêne (30, 30') est chargé par ressort.

5. Verrou de direction électrique (1) selon l'une quelconque des Revendications précédentes, dans lequel le pêne (30, 30') présente, dans sa section supérieure (31), un logement pour un dispositif d'actionnement (40, 40').

6. Verrou de direction électrique (1) selon l'une quelconque des Revendications précédentes, dans lequel le dispositif d'actionnement (40, 40') présente une forme de U et est muni des éléments suivants :
une première patte (43) pouvant être introduite dans une première rainure (33) du pêne (30, 30'),
une seconde patte (44) pouvant être introduite dans une première rainure (34) du pêne (30, 30'), et
une surface de butée (42) jouxtant les deux pattes (43, 44) et assemblée solidairement avec elles.

7. Verrou de direction électrique (1) selon l'une quelconque des Revendications, dans lequel la première rainure (33) présente une forme différente de la seconde rainure (34) du pêne (30, 30'), et la première patte (43) présente une forme différente de la seconde patte (44) du dispositif d'actionnement (40, 40').

8. Verrou de direction électrique (1) selon l'une quelconque des Revendications, dans lequel une surface de butée (42) frontale du dispositif d'actionnement (40) présente une incurvation concave.

9. Verrou de direction électrique (1) selon l'une quelconque des Revendications, dans lequel une surface de butée (42) frontale est positionnée latéralement.

10. Verrou de direction électrique (1) selon l'une quelconque des Revendications, dans lequel le pêne (30) présente une rainure de sécurité (37) dans la direction de la roue d'entraînement (21) et la roue d'entraînement (21) comprend une surface d'arrêt (21b) qui s'étend radialement en éventail, dans lequel le verrou électrique, lorsqu'il est dans l'état non verrouillé, bloque la surface de d'arrêt (21b) dans la rainure de sécurité (37).

11. Verrou de direction électrique (1) selon l'une quelconque des Revendications, dans lequel le pêne (30, 30') présente, dans la direction de la roue d'entraînement (21), une rainure de course libre (36) pour la surface d'arrêt (21b) de la roue d'entraînement (21).

12. Utilisation du verrou de direction électrique (1) selon l'une quelconque des Revendications, dans des véhicules présentant diverses positions et réglages de colonnes de direction.
